# EUROPEAN PATENT SPECIFICATION

(11) **EP 3 511 123 B1**
(45) Date of publication and mention of the grant of the patent: **23.11.2022**
(21) Application number: 19150923.1
(22) Date of filing: 09.01.2019
(51) Int. Cl.: B23Q 39/04, B27M 1/00, B23Q 1/01

(54) **MACHINING CENTER WITH TWO TABLES**
BEARBEITUNGSZENTRUM MIT ZWEI TISCHEN
CENTRE D'USINAGE AVEC DEUX TABLES

(30) Priority: 11.01.2018 IT 201800000719
(43) Date of publication of application: 17.07.2019
(73) Proprietor: PAOLINO BACCI S.R.L., 56021 Cascina (PI) (IT)
(72) Inventor: BACCI, Giuseppe, 56025 Pontedera (Pi) (IT); BACCI, Paolo, 56025 Pontedera (Pi) (IT); BACCI, Nino, 56025 Pontedera (Pi) (IT)
(74) Representative: Mannucci, Michele

(56) References cited:
- EP-A1- 2 527 081
- EP-A2- 0 906 806
- DE-A1- 19 842 386

## Description

### Technical field

The present invention relates to the field of numerically controlled machining centers, particularly but not exclusively to the wood machining field. More in particular, the subject matter of the invention is a numerically controlled machining center, with 3 or more machining axes, and also a machining method associated with numerically controlled machining centers, particularly but not exclusively for machining workpieces made of wood.

### State of the art

As is known, numerically controlled machining centers with 3 or more axes have been used for many years now to machine workpieces made of wood. Among the many machining centers of known type, machining centers comprising two workpiece-supporting tables, translatable parallel to each other on respective guides, are for example known.

A load-bearing structure, having a pair of machining heads equipped with one or more tool spindles, is provided at one end of the guides for the tables. Respective loading/unloading areas of the workpieces are provided at the opposite end of the guides.

The machining heads can move, for example, according to two axes, i.e., a vertical axis z and a horizontal axis x orthogonal to the axis y of movement of the table along the respective guide; therefore, by combining the movements of the table and of the head, machining operations can be carried out on the workpiece present on the table according to three axes. Alternatively, the tables are fixed in the machining area of the heads and the heads are provided with movement again according to the axis y parallel to the guides of the tables.

Naturally, it would also be possible for the machining heads to have rotation movements, for example a rotation about the axis z and a rotation about the axis x, obtaining machining operations according to 5 axes.

From the point of view of operation, the two heads carry out, for example, two different machining operations on the workpieces present on the two tables. For example, one workpiece is loaded onto one table and another workpiece is loaded onto the other table. The first table is moved under a first head for a first machining operation, while the second table is moved under the second head for a second operation. Therefore, each table is translated to a different position along its guide to be able to machine with the other head (which thus translates toward the new table), to carry out the missing machining operation. The tables then return to the loading/unloading position of the workpieces, where the machined workpiece is unloaded and a new workpiece is loaded.

Alternatively, the two heads can operate simultaneously on a single table, for example to carry out machining operations on two different workpieces, or on a single workpiece, in parallel.

This type of machining center, although known and appreciated for many years, is not without limitations.

In fact, it is evident that in certain machining operations, during the loading/unloading step of a table, at least one machining head is not operating, resulting in loss of productivity.

Moreover, although this machining center can be replicated on a larger scale, for example by doubling the number of tables and of heads, it is not particularly efficient in terms of balancing of the workload of the heads, above when many tool changes are required.

Moreover, when machining operations of the two heads on a single table are carried out in parallel and simultaneously, the productivity of the machining center can be low.

Patent Document DE 198 42 386 A1 discloses a machining center comprising:
- two workpiece-supporting tables,
- two first guides, which extend parallel to a first direction; each table being movable along a respective of said first guides,
- two second guides, which extend parallel to a second direction transverse to said first direction,
- two machining assemblies, a first machining assembly comprising at least one machining head, and a second assembly comprising at least one machining head; each machining assembly being movable parallel to said second direction along a respective of said second guides,
- a portal structure arranged transversely to said first guides; on at least one side of said portal structure one said machining assembly being movable parallel to said second direction, on a respective second guide, said portal structure being superimposed on an intermediate position of said first guides, so that said tables are movable on said first guides under said portal structure, passing from one side to the other of said portal structure
- four machining areas in which the two machining assemblies can operate on workpieces present on said tables; along each first guide, i.e. for a respective table, two machining areas being present, one for each machining assembly, so that each machining assembly can operate, according to a programmed machining cycle, on both workpiece supporting tables,
- two workpiece loading/unloading areas, one for each workpiece-supporting table
- an electronic control unit on which a program is provided for managing the cycle of movements of said tables.

This document hence also discloses the corresponding method for carrying mechanical operations by means of such a machining center.

### Object and summary of the invention

The aim of the present invention is to solve the problems and improve the limitations in machining centers of known type, particularly but not exclusively for workpieces made of wood.

Within this aim, an important object of the present invention is to produce a machining center that allows optimization of the production times, reducing downtime to a minimum.

Another important object of the present invention, is to produce a machining center that allows production to be increased.

One more object of the present invention is to provide a method for carrying out mechanical machining operations on numerically controlled machining centers, particularly but not exclusively for machining workpieces made of wood, which allows production to be increased.

This aim, these and other objects, which will be more apparent below, are achieved with a machining center according to appended claim 1.

Advantageously, according to preferred embodiments the first machining assembly comprises two machining heads adapted to operate on the same table.

The machining center is particularly, but not exclusively, suitable when there are two machining assemblies that carry out machining operations with different times, so that during the time in which the first assembly carries out a machining operation on one table, the other table moves to carry out the machining operation on the second assembly and to unload and load a new workpiece.

In fact, the machining center can be seen as a "preferably 2x2 matrix" structure, in which the first guides represent the columns of the matrix and the second guides represent the rows of the matrix, and in which the tables translate on the first guides and the machining assemblies translate on the second guides and in which each machining assembly always operates on one table at a time and does not operate simultaneously on more than one table. In this way, as an assembly with two machining heads is present it is possible to program the machining cycles of the machining center so that on one table the workpiece/workpieces to be machined are being unloaded and loaded while on the other table the machining assembly with two heads is carrying out machining operations. In practice, the workpieces are unloaded and loaded in parallel while the machining operations are being carried out on the other table, to the advantage of productivity of the machining center and balancing of the time of the machining operations.

Preferably, the program for managing the cycle of movements of the tables includes, for each table:
positioning in the corresponding loading/unloading area, to load at least one workpiece onto said table,
translation, along the respective first guide, from said loading/unloading area toward the machining area corresponding to interaction with said first machining assembly, and positioning in said machining area to carry out a machining operation by one of the two heads of said first machining assembly,
remaining in said machining area to carry out a further machining operation by the other of the two heads of said first machining assembly,
translation toward the second machining area along the corresponding first guide and positioning in said second machining area in which the programmed machining operation can be carried out by said second machining assembly,
translation toward said loading/unloading area to unload the workpiece and restart the cycle from step a) on a subsequent workpiece.

According to preferred embodiments, as already mentioned the program for managing the cycle of movements of the tables provides that in the time in which one table is arranged in the machining operation area of said first machining assembly, the other table takes two positions, a position in the machining area corresponding to said second machining assembly to allow the machining operation of said second machining assembly, and a position in the loading/unloading area, to allow loading/unloading of the workpiece (not necessarily in the order indicated here, as it may also be in reverse order, i.e., the second table first occupies the loading/unloading area and then occupies the machining area to interact with the second machining assembly).

Advantageously, the machining center comprises only two workpiece-supporting tables and only two machining assemblies, of which one with two machining heads and the other with at least one machining head, preferably a single machining head. It is understood that for specific requirements the second assembly could also have two machining heads.

The two heads of the first assembly can machine, on the same table, different workpieces or the same workpiece. In the same workpiece they can machine different elements and parts, even very close to one another. With the two heads of the first assembly it is also possible to carry out machining operations in parallel on the same workpiece.

In some embodiments, the two heads are symmetrical in shape, with the spindles moved to one side, so as to maximize the movement of the two heads toward each other to carry out simultaneous machining operations on the same workpiece.

According to the present invention, the machining center comprises at least one portal structure arranged transversely to said first guides; on at least one side of said portal structure one said machining assembly being movable parallel to said second direction, on a respective second guide.

The portal structure is superimposed on an intermediate position of said first guides, so that said tables are movable on said first guides under the portal structure, passing from one side to the other of said portal structure.

Preferably, the machining heads have numerically controlled machining axes; the movement of the tables is numerically controlled.

According to preferred embodiments, said at least one machining head of at least one of said machining assemblies is of the type
having two machining axes, with a first vertical translation axis and a second horizontal translation axis corresponding to the axis of the second guide on which it moves, so that, in combination with the axes corresponding to the movement of the tables along the respective first guides, said machining center has at least 3 machining axes; or
having four machining axes, with a first vertical translation axis and a second horizontal translation axis corresponding to the axis of the second guide on which it moves, a third rotation axis and a fourth rotation axis, so that, in combination with the axes corresponding to the movement of the tables along the respective first guides, said machining center has at least 5 machining axes.

Preferably, all the heads of the machining assemblies are of the type indicated above, i.e.:
having two machining axes, with a first vertical translation axis and a second horizontal translation axis corresponding to the axis of the second guide on which it moves, so that, in combination with the axes corresponding to the movement of the tables along the respective first guides, said machining center has at least 3 machining axes; or
having four machining axes, with a first vertical translation axis and a second horizontal translation axis corresponding to the axis of the second guide on which it moves, a third rotation axis and a fourth rotation axis, so that, in combination with the axes corresponding to the movement of the tables along the respective first guides, said machining center has at least 5 machining axes.

It is clear that some heads can have three or more axes, others four or more axes, other five or more axes, other seven or more axes, etc.. Alternatively, the heads can all have the same number of axes.

The loading/unloading areas of the workpieces are provided in first end areas of said first guides.

Preferably, the machining center comprises a single said portal structure, on which at least one said second machining assembly, preferably only one, arranged on a corresponding side of said portal structure, moves in said second direction.

According to the present invention, the machining center comprises a load-bearing structure provided in second end areas of said first guides, on the opposite side with respect to said first end areas, at least one said second guide for said first machining assembly being provided on said load-bearing structure.

Preferably, the load-bearing structure is facing said second ends of said first guides, without being superimposed thereon.

Therefore, according to the present invention, the machining center comprises a single portal structure superimposed on an intermediate position of said first guides, so that the tables are movable on said first guides under the portal structure, passing from one side to the other of said portal structure, on which at least one said second machining assembly, preferably only one, arranged on a corresponding side of said portal structure, moves in said second direction, and further comprises a load-bearing structure provided in second end areas of said first guides, on the opposite side with respect to first end areas, at least one said second guide for said first machining assembly being provided on said load-bearing structure.

Preferably, the heads of said first machining assembly movable on said load-bearing structure are machining heads having at least three axes, a first vertical translation axis and a second horizontal translation axis corresponding to the axis of the second guide on which it moves, and a third translation axis parallel to said first direction, two further rotation axes being optionally possible.

According to some embodiments, a transverse bridge, translatable parallel to said second direction along a respective said second guide provided on said load-bearing structure, is associated with said at least one machining head, and along a further second guide positioned on said portal structure, said at least one machining head being slidable on said transverse bridge parallel to said first direction; said second machining head being slidingly arranged on the opposite side of said portal structure with respect to the side on which said further second guide is positioned. Preferably, two transverse bridges, on which respective machining heads are arranged slidingly, are present.

According to some embodiments, the load-bearing structure is a portal structure that is superimposed on the second end areas of said first guides.

Advantageously, positioning of said tables on said machining areas is coordinated so that two tables never occupy two machining areas on which a same machining assembly can operate.

According to another aspect, the invention also relates to a method for carrying out mechanical machining operations by means of a machining center according to one or more of the embodiments or configurations cited above, or combinations thereof.

According to this aspect, the invention also relates to a method for carrying out mechanical machining operations by means of a machining center , according to appended claim 11.

Preferably, positioning of said tables on said machining areas is coordinated so that two tables never occupy two machining areas on which a same machining assembly can operate.

### Brief description of the drawings

Further characteristics and advantages of the invention will become more apparent from the description of several preferred but non-exclusive embodiments thereof, illustrated by way of non-limiting example in the accompanying drawings, wherein:
Fig. 1 represents a schematic top view of an example of machining center according to the invention, with the workpiece-supporting tables in a first configuration corresponding to step 1 of the machining cycle;
Fig. 2 represents a front view of the machining center of Fig. 1, in the same configuration, viewed according to the line II-II
Fig. 3 represents a front view of the machining center of Fig. 1, in the same configuration, viewed according to the line III-III;
Fig. 4 represents a side view of the machining center of Fig. 1, in the same configuration;
Figs. 5 to 9 represent a diagram of the layout of the workpiece-supporting tables in five subsequent steps of a complete machining cycle, relating to a machining center as illustrated in the preceding figures;
Figs. 10 to 12 represent three schematic views of a machining center according to the invention, varying with respect to the center of the preceding figures, and in particular, respectively, a top view, a portion of front view and a partially sectional side view;
Fig. 13 represents a diagram of the layout of the workpiece-supporting tables relating to a machining center as illustrated in Figs. 10-12, shown in the same step illustrated in Fig. 5.

### Detailed description of an embodiment of the invention

With reference to the previously cited figures, a machining center for machining workpieces made of wood is indicated as a whole with the number 10.

The machining center 10 comprises two rectilinear first guides G1 and G2, which extend parallel to a horizontal direction Y.

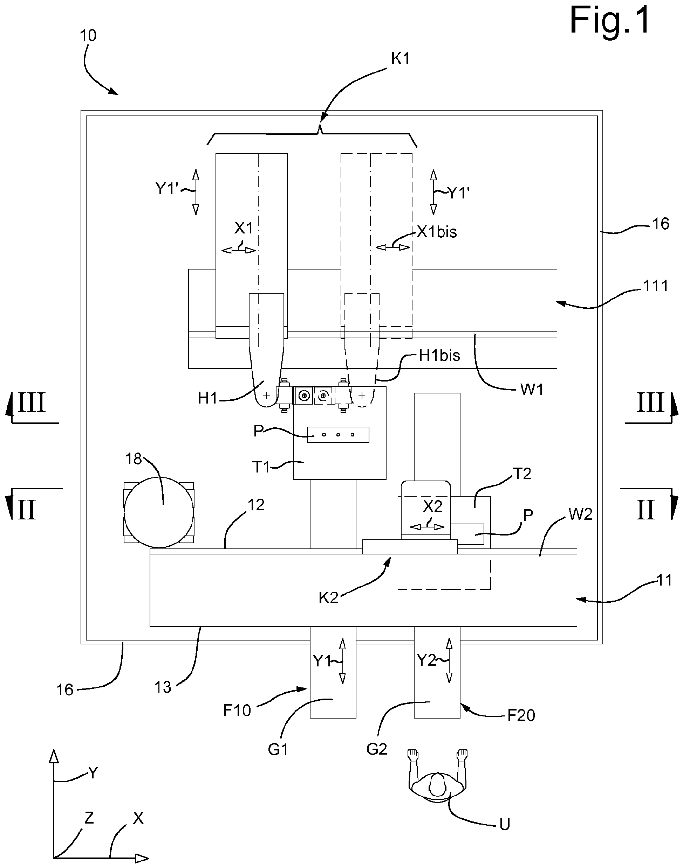

Respective workpiece-supporting tables T1, T2 are mounted on these first guides G1, G2 (hereinafter, when referring to both or indifferently to one or the other, they will also be indicated simply with G), one for each guide (hereinafter, when referring to both or indifferently to one or the other, they will also be indicated simply with T). Each table can support one or more workpieces P (indicated only in the top view, i.e., in Fig. 1). The directions of extension of each first guide, i.e., the directions of movement of the tables T, are indicated respectively with y1 and y2.

Preferably these workpieces P can be of elongated type, i.e., with a longitudinal dimension prevailing over the other two, or also extend prevalently in two dimensions, for example like door and window frames. It must be understood that other types of workpieces of various shapes can also be loaded and machined on the tables of the machining center according to the invention.

The tables T are translatable on the guides G in a numerically controlled manner.

The loading/unloading areas F10, F20 of the respective tables T (hereinafter, when referring to both or indifferently to one or the other, they will also be indicated simply with F) are defined in first end areas of the first guides G1, G2. The figures show an operator who performs unloading and loading operations, but it is evident that these operations could also be carried out by automatic loading/unloading systems, for example of known type.

Advantageously, a guard 16 that surrounds the machining center is present. The loading/unloading areas F are outside the guard 16, to allow an operator to carry out the loading and unloading operations.

A load-bearing structure 111 is provided in second end areas of the first guides G, on the opposite side to the loading/unloading areas F, and facing the ends of said first guides G, without being superimposed thereon.

The end load-bearing structure 111 is provided with a second guide W1, which extends parallel to the direction X, horizontal and orthogonal to the direction Y, on which a first machining assembly K1 comprising, in preferred examples, two machining heads H1 and H1bis (the latter indicated with a dashed line), is arranged. In other embodiments, the first machining assembly can also have a single machining head.

The direction of extension of the second guide W1, i.e., the direction of translation of the assembly K or heads H1-H1bis is indicated with x1 and is marked, for simplicity, on the heads H1. These machining heads can be of the type with one spindle 15 or with several spindles, according to known types.

The machining heads H can have two or more machining axes. For example, the head H1 (or H1bis) has a first vertical translation axis z1 and a second horizontal translation axis corresponding to the axis x1 of the second guide W1 on which it moves, and a further translation axis y1', parallel to the direction Y, so as to allow the machining operation along this axis when the respective table T with which it interacts has reached the stroke end position of the guide G, position in which the table can no longer advance. It is clear that the two heads H1 and H1bis can also operate individually on a table and not necessarily as a pair (preferably the assembly K1 operates on one table at a time, both when using only one of the two heads, and when using both simultaneously).

It is also possible to add other machining axes to the head H1. For example, the head H1 can have a third rotation axis g1, parallel to the first direction Y and a fourth rotation axis r1, parallel to (or coincident with) the vertical translation axis z1, so that the machining center 10 has at least 5 machining axes.

It should be noted how in this example the two heads H1 and H1bis are symmetrical in shape, with the spindles moved to the opposite sides, so as to reduce the footprint in the direction in which the two heads move toward each other, i.e., to maximize the movement of the two heads toward each other to carry out simultaneous machining operations on the same workpiece P.

The machining center 10 comprises a load-bearing structure, of portal type 11, arranged in an intermediate position of the first guides G, so that the tables T move on the first guides G under the portal structure, being able to pass from the front side 12 to the rear side 13 thereof, and vice versa, or being positioned partially under this portal structure, if necessary.

A second guide W2 is provided on the front side 12 of the portal structure 11, horizontal and orthogonal to the guides G, on which a machining assembly K2 supporting a machining head H2 is arranged.

The direction of extension of the second guide W2, i.e., the direction of translation of the assembly K2 or head H2 is indicated with x2 and is marked, for simplicity, on the head H2. This machining head can be of the type with one spindle 15 or with several spindles, according to known types. A tool magazine 18 can be present, for example arranged at the side of the portal structure.

The machining head H2 can have two or more machining axes. For example, the head H2 has a first vertical translation axis z2 and a second horizontal translation axis corresponding to the axis x2 of the second guide W2 on which it moves, so that, in combination with the axes y1, y2, corresponding to the movement of the tables T1, T2 along the respective first guides G1 G2, the machining center is of the type with at least 3 machining axes. It is also possible to add other machining axes to the head H2. For example, the head H2 can have a third rotation axis g2, parallel to the first direction Y and a fourth rotation axis r2, parallel to (or coincident with) the vertical translation axis z2, so that, in combination with the axis y1 corresponding to the movement of the table T1, the machining center 10 has at least 5 machining axes.

The head H2 can translate on the respective second guide W2 according to its direction x2, so as to be able to operate on both the tables T1-T2.

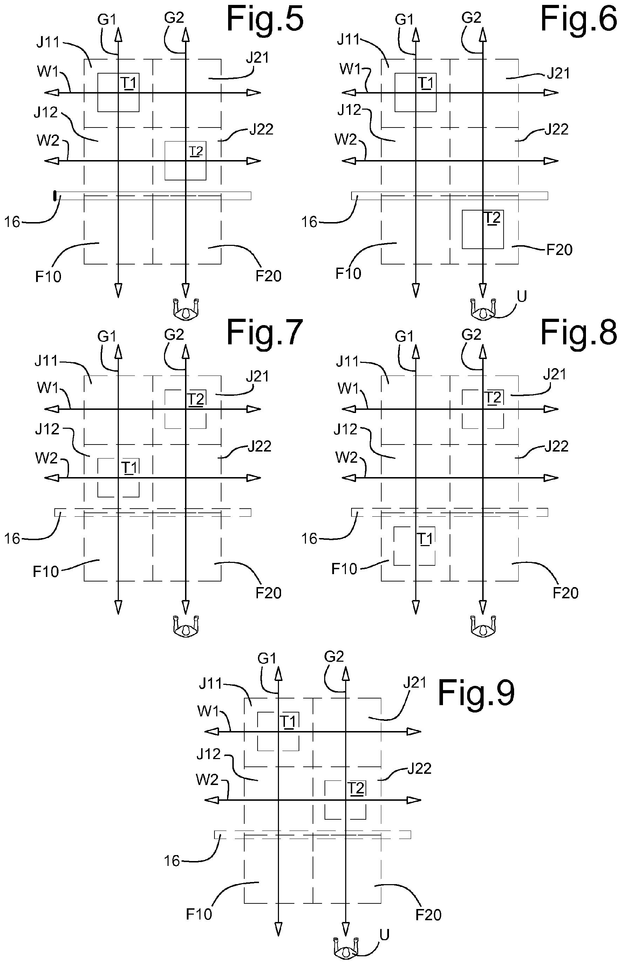

By means of the combination of the movement of the tables T and of the machining assemblies K1 and K2 (or heads H1, H1bis, H2), 2x2=4 machining areas are defined in the machining center 10, in which the machining assemblies K can machine the workpieces P present on the tables T; these machining areas are shown from above in a "matrix" diagram in Figs. 5 to 9 and indicated with the letter J and a pair of successive numbers in which the first number corresponds to the number relating to the first guide along which a table moves, while the second number corresponds to the number relating to the second guide along which a machining assembly moves (for example the table T1 moves on the first guide G1 and the machining assembly K2 moves on the second guide W2, so that the machining area defined by the movement of the machining assembly K2 and by the movement of the table T1 is named J12). These machining areas are in practice spaces that can be occupied by the tables during the machining operations with the assemblies and do not only correspond to a fixed position of the tables.

More in detail, in this example, two machining areas, one for each machining assembly, are present along each first guide G, i.e., for a respective table T, so that each machining assembly K (or the respective machining heads H) can operate, according to a programmed machining cycle, on both the workpiece-supporting tables T, preferably not simultaneously.

From a practical point of view, according to the invention, the number of machining assemblies K is the same as the number of tables (and corresponding loading/unloading areas).

The machining center 10, comprises, obviously, an electronic control unit, not represented in the figures, adapted to manage the center. This control unit is provided with an advantageous program for managing the cycle of coordinated movements of the tables T to carry out the machining operations by means of the machining assemblies K, which allows optimization of the machining times, reducing downtime.

This machining center is particularly flexible for machining cycles in which the first machining assembly (but it can also be used with other machining cycles).

The program for managing the cycle of movements of the tables T1 and T2 provides that in the time in which one table T is arranged in the machining area (J11-J21) of the first machining assembly K1, the other table takes two positions, a position in the machining area (J12-J22) corresponding to the second machining assembly K2 to allow the machining operation by the second machining assembly, and a position in the loading/unloading area F, to allow loading/unloading of the workpiece.

A concrete example is described below. Figs. 5 to 9 show a "matrix" diagram of the machining center, in which the columns in practice represent the first guides G, while two rows represent the guides W on which the assemblies K or machining heads H move. The crossing points of these rows with columns in practice represent the machining areas J.

For example, with reference to Fig. 5 (step 1), and with reference to a moment of the cycle not corresponding to machine start-up, the table T1 is in the machining area J11, i.e., it is interacting with the assembly K1, and in particular it is undergoing a machining operation by the head H1, to allow the workpiece P loaded thereon to undergo a first part of a first machining operation; the table T2 is instead in the area J22 in which it is interacting with the assembly K2, or, the head H2, to carry out a second machining operation on the respective workpiece.

Subsequently (Fig. 6, step 2), the table T1 is maintained in the position J11, to interact once again with the assembly K1, and in particular it is undergoing a machining operation by head H1bis, to allow the workpiece P loaded thereon to undergo the second part of a first machining operation, completing the machining operation of the first assembly K1. Instead, the table T2 is translated to the loading/unloading position F20 to unload the workpiece that has undergone both machining operations by the heads H1-H1bis and H2.

Subsequently (Fig. 7, step 3), the table T2, with the new workpiece loaded, is translated to the position J21, to carry out the first part of the first machining operation on the workpiece in cooperation with the head H1, while the table T1 is translated to the position J22 to carry out the second machining operation on the workpiece in cooperation with the head H2.

Subsequently (Fig. 8, step 4), the table T2 is maintained in the position J21, to interact once again with the assembly K1, and in particular it is undergoing a machining operation by the head H1bis, to allow the workpiece P loaded thereon to undergo the second part of a first machining operation, completing the machining operation of the first assembly K1. Instead, the table T1 is translated to the loading/unloading position F10 to unload the workpiece that has undergone both the machining operations by the heads H1-H1bis and H2.

Subsequently (Fig. 9, step 5-step 1), the table T1, with the new workpiece loaded, is translated to the position J11, to carry out the first part of the first machining operation on the workpiece in cooperation with the head H1, while the table T2 is translated to the position J22 to carry out the second machining operation on the workpiece in cooperation with the head H2. This step coincides with the step 1 described above, and therefore the cycle starts again.

In practice, the two machining assemblies K1 and K2 carry out machining operations with different times, for example a difference dt. Advantageously, this difference dt is sufficient to allow a table that has undergone the shortest machining operation to unload the workpiece and load a new one, thereby allowing optimum productivity of the machining center.

It is clear that the order or movement of the tables in other machining cycles can be different, maintaining the same logic of the invention.

The type of heads (single or multi-spindle, with tool change, etc.), for each assembly, the number of machining axes thereof, the type and the number and the position of the tool magazines, etc. can vary greatly, according to requirements and to the state of the art.

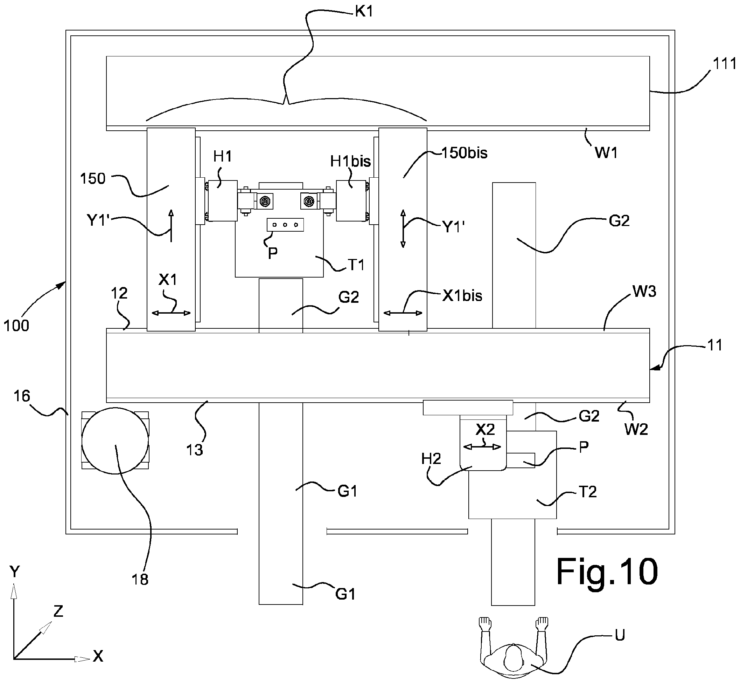

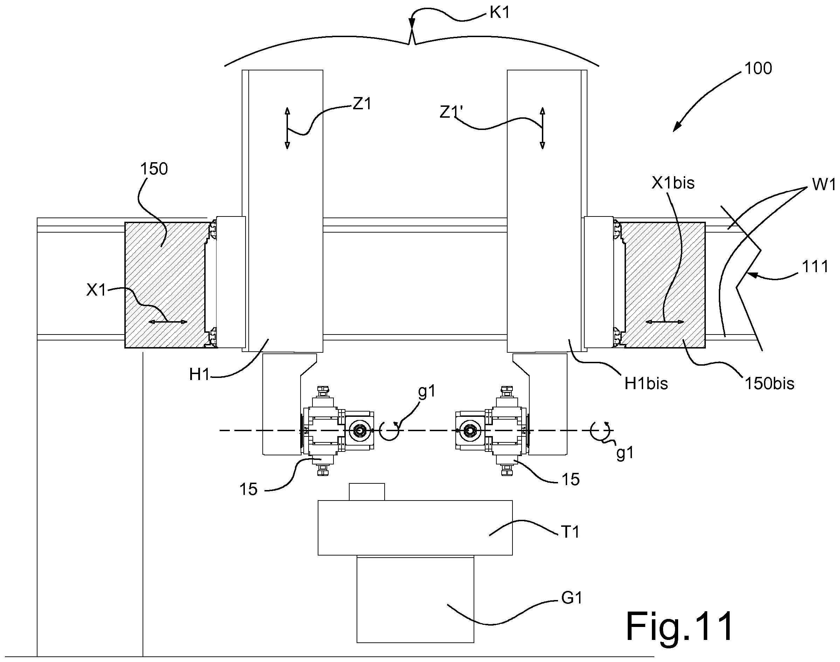

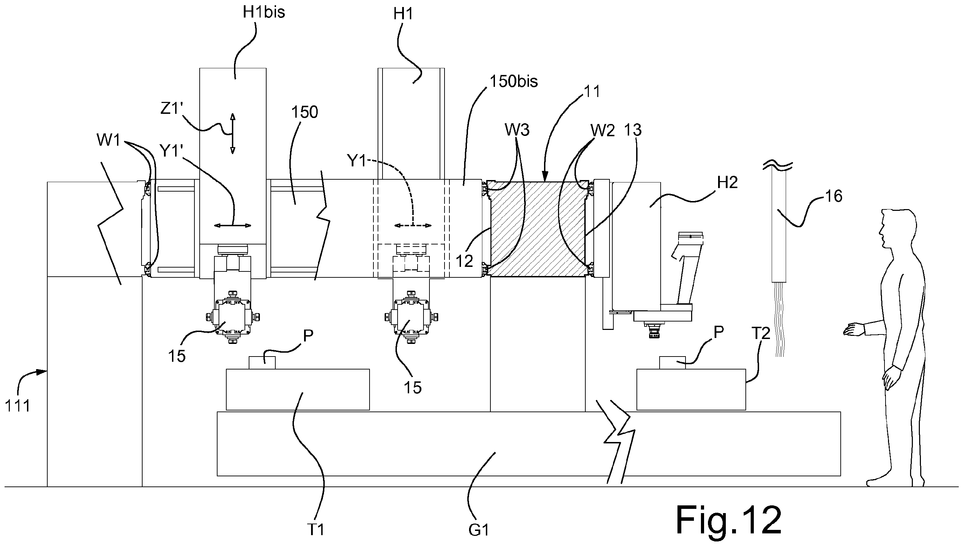

Analogously to what is described above, Figs. 10 to 13 show a variant of machining center according to the invention, now indicated as a whole with the number 100. The numbering of the parts of this machining center 100 will be substantially the same as the previous center for corresponding parts.

Therefore, analogously to the previous case, the machining center 100 comprises
- the two first guides G1 and G2;
- the workpiece- supporting tables T1, T2, one for each guide;
- the loading/unloading areas F10, F20 of the respective tables T,
- the guard 16;
- the load-bearing structure 111 provided in second end areas of the first guides G, on the opposite side to the loading/unloading areas F, and facing the ends of said first guides G, preferably without being superimposed thereon;
- the load-bearing structure of portal type 11, arranged in an intermediate position to the first guides G, so that the tables T are movable on the first guides G under the portal structure, being able to pass from the front side 12 to the rear side 13 thereof, and vice versa, or being positioned partially under this portal structure, if necessary;
- the first machining assembly K1, which comprises in the preferred examples, two machining heads H1 and H1bis, movable along W1;
- a machining assembly K2, supporting a machining head H2, movable along W2.

In this example the second guide W2 and the head H2 (analogous to the head of the previous example), movable thereon, are positioned on the rear side 13 of the portal structure 11. Therefore, in this case the machining areas J11 and J21 are defined between the load-bearing structure 111 and the portal structure 11, while the machining areas J12 and J22 are defined on the opposite side of the portal structure 11 with respect to the areas J11 and J21.

A second guide W3, parallel to W2 and W1, is present on the front side 12 of the portal structure 11. A transverse bridge 150 (and 150bis), which extends between the portal structure 11 and the load-bearing structure 111, supported slidingly on the guides W1 and W3, is associated with each head H1 and H1bis of the first machining assembly K1. The transverse bridges 150 are moved by means of suitable motors along the directions x1 and x1bis, and are numerically controlled.

Each head H1-H1bis is arranged slidingly on a respective transverse bridge 150-150bis, along respective translation axes Y1', in a numerically controlled manner.

As in the previous case, the machining heads H1-H1bis can be of the type with one spindle 15 or with several spindles, according to known types.

The machining heads H can have two or more machining axes. For example, the head H1 (or H1bis) has a first vertical translation axis z1 and a second horizontal translation axis corresponding to the axis x1 of the transverse bridge on which it is mounted, and a further translation axis y1', parallel to the direction Y along the respective transverse bridge. It is clear that the two heads H1 and H1bis can also operate individually on a table and not necessarily in a pair (preferably the assembly K1 operates on one table at a time, both when using only one of the two heads, and when it uses them both simultaneously).

It is also possible to add other machining axes to the head H1(H1bis). For example, the head H1 can have a third rotation axis g1, parallel to the first direction Y and a fourth rotation axis r1, parallel to (or coincident with) the vertical translation axis z1, so that the machining center 100 has at least 5 machining axes.

It should be noted how in this example the two heads H1 and H1bis are symmetrical in shape, with the spindles moved to the opposite sides, so as to reduce the footprint in the direction in which the two heads move toward each other, i.e., to maximize the movement of the two heads toward each other to carry out simultaneous machining operations on the same workpiece P.

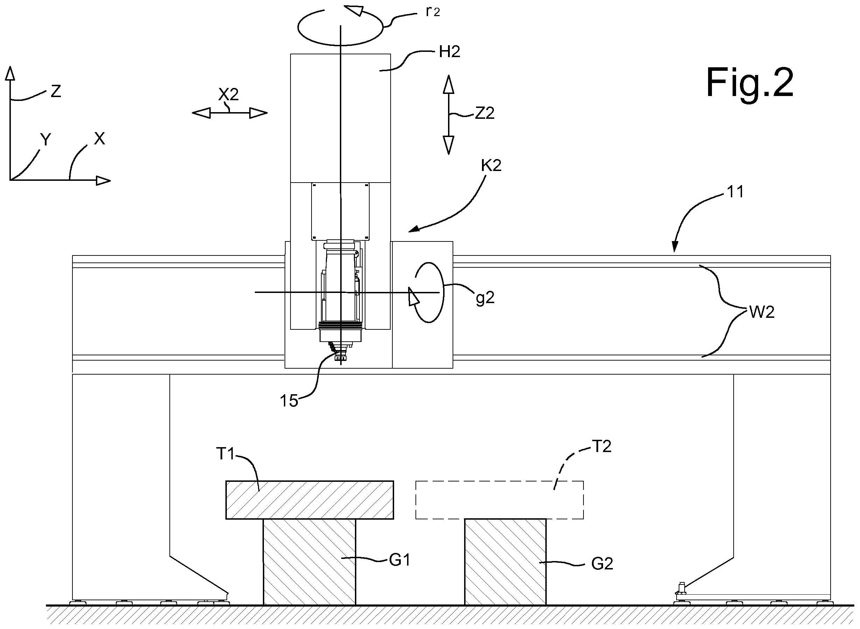

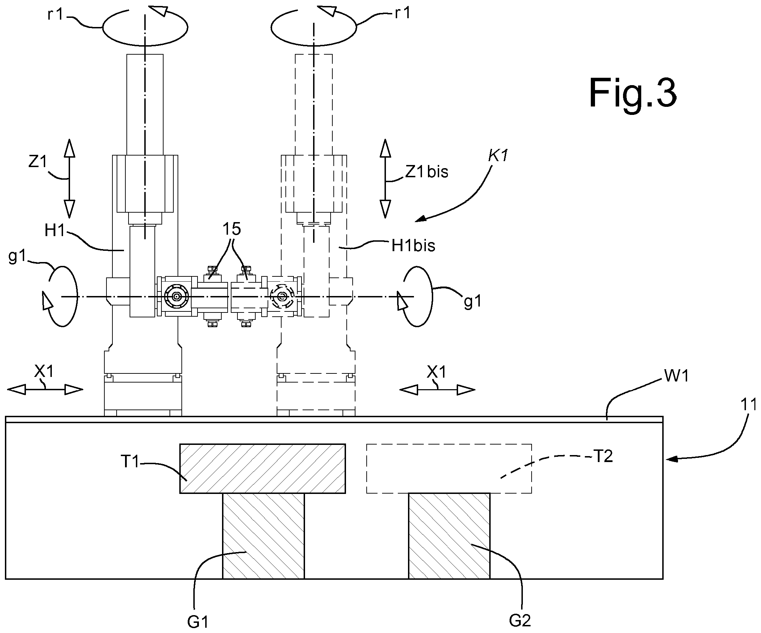

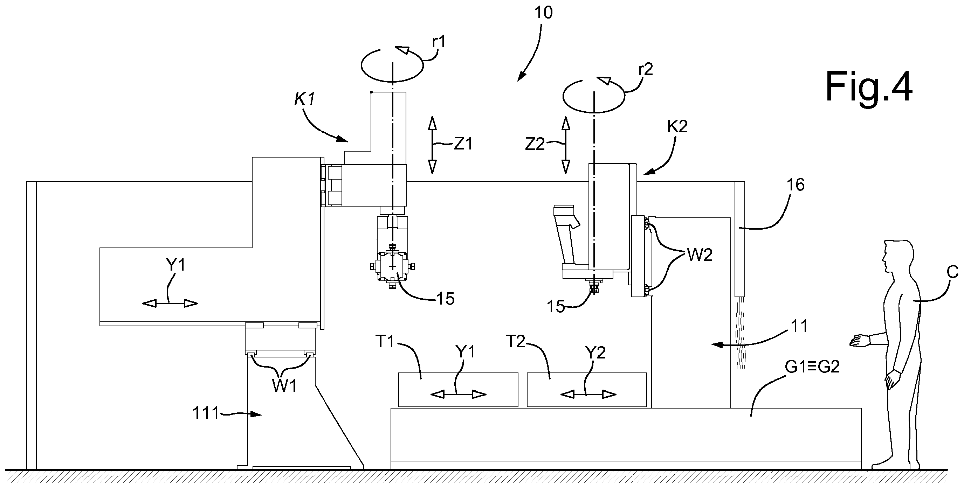

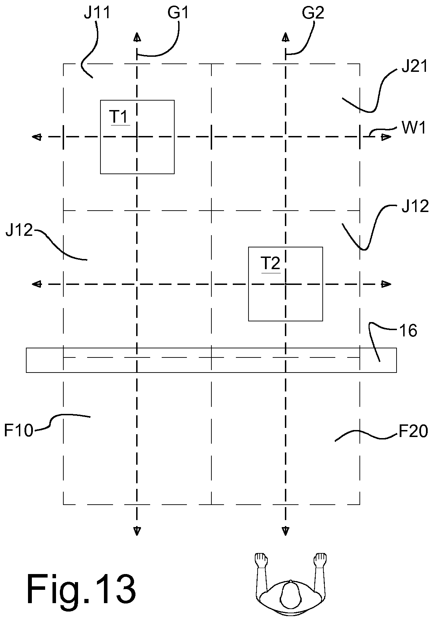

The operation of this second embodiment is substantially the same as the machining center of the previous case. Fig. 13 shows the diagram of the machining areas, with reference the same step of Fig. 5. Here, the machining areas J12-J22 are arranged between the loading/unloading areas F10-F20 and the portal structure 11. As can be seen, the diagrams of Fig. 5 and of Fig. 13 are identical, as are the diagrams relating to the operating steps of the case of Figs. 10-12 with respect to the steps of the example of Fig. 1-4.

It is understood that the drawing only shows possible non-limiting embodiments of the invention, which can vary in forms and arrangements without however departing from the scope of the appended claims.

Any reference numerals in the appended claims are provided purely to facilitate the reading thereof, in the light of the above description and accompanying drawings, and do not in any way limit the scope of protection.

## Claims

1. A machining center (10) comprising:
- two workpiece-supporting tables (T1, T2),
- two first guides (G1, G2), which extend parallel to a first direction (Y); each table (T1, T2) being movable along a respective of said first guides (G1, G2),
- two second guides (W1, W2), which extend parallel to a second direction (X) transverse to said first direction (Y),
- two machining assemblies (K1, K2), a first machining assembly (K1) comprising at least one machining head (H1, H1bis), and a second assembly (K2) comprising at least one machining head (H2); each machining assembly (K1, K2) being movable parallel to said second direction (X) along a respective of said second guides (W1, W2);
- a portal structure (11) arranged transversely to said first guides (G1, G2); on at least one side (12, 13) of said portal structure (11) one said machining assembly (K2) being movable parallel to said second direction (X), on a respective second guide (W2), said portal structure (11) being superimposed on an intermediate position of said first guides (G1, G2), so that said tables (T1, T2) are movable on said first guides (G1, G2) under said portal structure (11), passing from one side to the other (12, 13) of said portal structure (11),
- a load-bearing structure (111) provided in second end areas of said first guides (G1, G2), on the opposite side with respect to first end areas, at least one said second guide (W1) for said first machining assembly (K1) being provided on said load-bearing structure (111),
- four machining areas (J11, J12, J21, J22) in which the two machining assemblies (K1, K2) can operate on workpieces present on said tables (T1, T2); along each first guide (G1, G2), that is for a respective table (T1, T2), two machining areas being present, one for each machining assembly (K1, K2), so that each machining assembly (K1, K2) can operate, according to a programmed machining cycle, on both workpiece-supporting tables (T1, T2),
- two workpiece loading/unloading areas (F10, F20) defined in said first end areas, one for each workpiece-supporting table (T1, T2),
- an electronic control unit on which a program for managing the cycle of movements of said tables (T1, T2) is provided;

2. Machining center according to claim 1, wherein said first machining assembly (K1) comprises two machining heads (H1, H1bis) adapted to operate on the same table (T1, T2).

3. Machining center according to one or more of the preceding claims, comprising only two workpiece-supporting tables (T1, T2) and only two machining assemblies (K1, K2).

4. Machining center according to one of the preceding claims, comprising a single said portal structure (11), on which said second machining assembly (K2), arranged on a corresponding side (12, 13) of said portal structure (11), moves in said second direction (X).

5. Machining center according to claim 1, wherein a transverse bridge (150, 150bis), translatable parallel to said second direction (X) along a respective said second guide (W1) provided on said portal structure (111) is associated with said at least one machining head (H1, H1bis), and along a further second guide (W3) positioned on said portal structure (11), said at least one machining head (H1, H1bis) sliding on said transverse bridge (150, 150bis) parallel to said first direction (Y); said second machining head (H2) being arranged slidingly on the opposite side (13) of said portal structure (11) with respect to the side on which said further second guide (W3) is positioned.

6. Machining center according to claim 5, wherein two transverse bridges (150, 150bis), on which respective machining heads (H1, H1bis) are arranged slidingly, are present.

7. Machining center according to one or more of claims 1, 5, 6, wherein said load-bearing structure (111) faces said second ends of said first guides (G1, G2), without being superimposed thereon.

8. Machining center according to one or more of claims 1, 5, 6, 7, wherein said load-bearing structure is a portal structure; preferably said structure being superimposed on the second end areas of said first guides (G1, G2).

9. Machining center according to one or more of the preceding claims, wherein positioning of said tables (T1, T2) on said machining areas (J) is coordinated so that two tables (T1, T2) never occupy two machining areas on which a same machining assembly (K1, K2) can operate.

10. Method for carrying out mechanical machining operations by means of a machining center comprising
- two workpiece-supporting tables (T1, T2),
- two first guides (G1, G2), which extend parallel to a first direction (Y); each table being movable along a respective of said first guides,
- two second guides (W1, W2), which extend parallel to a second direction (X) transverse to said first direction (Y),
- two machining assemblies (K1, K2) of which a first assembly (K1) comprising at least one machining head (H1, H1bis), and a second assembly (K2) also comprising at least one machining head (H2); each machining assembly (K1, K2) being movable parallel to said second direction (X) along a respective of said second guides (W1, W2);
- a portal structure (11) arranged transversely to said first guides (G1, G2); on at least one side (12, 13) of said portal structure (11) one said machining assembly (K2) being movable parallel to said second direction (X), on a respective second guide (W2), said portal structure (11) being superimposed on an intermediate position of said first guides (G1, G2), so that said tables (T1, T2) are movable on said first guides (G1, G2) under said portal structure (11), passing from one side to the other (12, 13) of said portal structure (11),
- a load-bearing structure (111) provided in second end areas of said first guides (G1, G2), on the opposite side with respect to first end areas, at least one said second guide (W1) for said first machining assembly (K1) being provided on said load-bearing structure (111),
- four machining areas (J11, J12, J21, J22) in which the two machining assemblies (K1, K2) can operate on the workpieces present on said tables (T1, T2); along each first guide, i.e. for a respective table, two machining areas being present, one for each machining assembly, so that each machining assembly can operate, according to a programmed machining cycle, on both workpiece-supporting tables,
- two workpiece loading/unloading areas (F10, F20) defined in said first end areas, one for each workpiece-supporting table,
- an electronic control unit on which a program for managing the cycle of movements of said tables is provided; said method providing, for each table (T1, T2):
a) positioning in the corresponding loading/unloading area (F10, F20), to load at least one workpiece onto said table,
b) translation, along the respective first guide (G1, G2), from said loading/unloading area (F10, F20) toward the machining area (J11, J12, J21, J22) corresponding to interaction with said first machining assembly (K1), and positioning in said machining area to carry out a machining operation by at least one machining head (H1) of said first machining assembly,
c) remaining in said machining area (J11, J12, J21, J22) to carry out a further machining operation by at least one machining head (H1) of said first machining assembly (K1),
d) translation toward the second machining area (J11, J12, J21, J22) along the corresponding first guide and positioning in said second machining area in which the programmed machining operation can be carried out by said second machining assembly (K2),
e) translation toward said loading/unloading area (F10, F20) to unload the workpiece and restart the cycle from step a) on a subsequent workpiece, and wherein, in the time in which a table (T1, T2) is arranged in the machining area (J11, J12, J21, J22) of said first machining assembly (K1), the other table (T1, T2) takes two positions, a position in the machining area (J11, J12, J21, J22) corresponding to said second machining assembly (K2) to allow the machining of said second machining assembly (K2), and a position in the loading/unloading area (F10, F20), to allow loading/unloading of the workpiece; preferably positioning of said tables i (T1, T2) in said machining areas i (J11, J12, J21, J22) s coordinated so that two tables (T1, T2) never occupy two machining areas (J11, J12, J21, J22) on which a same machining assembly (K1, K2) can operate.

11. Method for carrying out mechanical machining operations by means of a machining center (10) according to claim 10 , wherein said first machining assembly (K1) comprises two machining heads (H1, H1bis), adapted to operate on the same table (T1, T2); for the step relating to the aforesaid point b), for each table (T1, T2), positioning takes place in said machining area (J11, J12, J21, J22) to carry out a machining operation by one of the two heads (H1, H1bis) of said first machining assembly (K1), and, for the step at point c) remaining in said machining area (J11, J12, J21, J22) takes place to carry out a further machining operation by the other of the two heads (H1, H1bis) of said first machining assembly (K1); preferably positioning of said tables (T1, T2) in said machining areas (J11, J12, J21, J22) is coordinated so that two tables (T1, T2) never occupy two machining areas (J11, J12, J21, J22) on which a same machining assembly (K1, K2) can operate.

## Patentansprüche

1. Bearbeitungszentrum (10) mit:
- zwei Werkstück-Trägertischen (T1, T2),
- zwei ersten Führungen (G1, G2), die sich parallel zu einer ersten Richtung (Y) erstrecken, wobei jeder Tisch (T1, T2) entlang einer jeweiligen der ersten Führungen (G1, G2) bewegbar ist,
- zwei zweiten Führungen (W1, W2), die sich parallel zu einer zweiten Richtung (X) quer zu der ersten Richtung (Y) erstrecken,
- zwei Bearbeitungsanordnungen (K1, K2), wobei eine erste Bearbeitungsanordnung (K1) mindestens einen Bearbeitungskopf (H1, H1bis) aufweist, und eine zweite Anordnung (K2) mit mindestens einem Bearbeitungskopf (H2), wobei jede Bearbeitungsanordnung (K1, K2) parallel zu der zweiten Richtung (X) entlang einer jeweiligen der zweiten Führungen (W1, W2) bewegbar ist,
- einer Portalstruktur (11), die quer zu den ersten Führungen (G1, G2) angeordnet ist, wobei an mindestens einer Seite (12, 13) der Portalstruktur (11) eine der Bearbeitungsanordnungen (K2) parallel zu der zweiten Richtung (X) auf einer jeweiligen zweiten Führung (W2) bewegbar ist, wobei die Portalstruktur (11) in einer Zwischenposition der ersten Führungen (G1, G2) überlagert ist, sodass die Tische (T1, T2) auf den ersten Führungen (G1, G2) unter der Portalstruktur (11) bewegbar sind, wobei sie von einer Seite zu der anderen (12, 13) der Portalstruktur (11) passieren,
- einer Last-Lagerstruktur (111), die in zweiten Endbereichen der ersten Führungen (G1, G2) auf der gegenüberliegenden Seite mit Bezug auf erste Endbereiche vorgesehen sind, wobei mindestens eine der zweiten Führungen (W1) für die erste Bearbeitungsanordnung (K1) auf der Last-Lagerstruktur (111) vorgesehen ist,
- vier Bearbeitungsbereichen (J11, J12, J21, J22), in denen die beiden Bearbeitungsanordnungen (K1, K2) an einem Werkstück, das auf den Tischen (T1, T2) vorhanden ist, arbeiten können, wobei entlang der ersten Führung (G1, G2) die für einen jeweiligen Tisch (T1, T2) vorgesehen ist, zwei Bearbeitungsbereich vorgesehen sind, einer für jede Bearbeitungsanordnung (K1, K2), sodass jede Bearbeitungsanordnung (K1, K2) entsprechend eines programmierten Bearbeitungszyklus auf beiden Werkstück-Trägertischen (T1, T2) arbeiten können,
- zwei Werkstück-Lade/Entlade-Bereichen (F10,F20), die in den ersten Endbereichen vorgesehen sind, jeweils einer für jeden Werkstück-Trägertisch (T1, T2),
- einer elektronischen Steuereinheit, in der ein Programm zur Verwaltung des Zyklus der Bewegungen der Tische (T1, T2) vorgesehen ist;

2. Bearbeitungszentrum nach Anspruch 1, wobei die erste Bearbeitungsanordnung (K1) zwei Bearbeitungsköpfe (H1, H1bis) aufweist, die ausgebildet sind, um an demselben Tisch (T1, T2) zu arbeiten.

3. Bearbeitungszentrum nach einem oder mehreren der vorstehenden Ansprüche mit nur zwei Werkstück-Trägertischen (T1, T2) und nur zwei Bearbeitungsanordnungen (K1, K2).

4. Bearbeitungszentrum nach einem der vorstehenden Ansprüche mit einer einzelnen Portalstruktur (11), auf der die zweite Bearbeitungsanordnung (K2), die an einer entsprechenden Seite (12, 13) der Portalstruktur (11) angeordnet ist, sich in der zweiten Richtung (X) bewegt.

5. Bearbeitungszentrum nach Anspruch 1, wobei einer Querbrücke (150, 150bis), die parallel zu der zweiten Richtung (X) entlang einer jeweiligen Führung (W1), die auf der Portalstruktur (111) vorgesehen ist, mindestens ein Bearbeitungskopf (H1, H1bis) zugeordnet ist und entlang einer weiteren zweiten Führung (W3), die auf der Portalstruktur (11) vorgesehen ist, wobei der mindestens eine Bearbeitungskopf (H1, H1bis) auf der Querbrücke (150, 150bis) parallel zu der ersten Richtung (Y) gleitet, wobei der zweite Bearbeitungskopf (H2) gleitend auf der gegenüberliegenden Seite (13) der Portalstruktur (11) mit Bezug auf die Seite, auf der die zweite Führung (W3) positioniert ist, angeordnet ist.

6. Bearbeitungszentrum nach Anspruch 5, wobei zwei Querbrücken (150, 150bis) vorhanden sind, auf denen jeweilige Bearbeitungsköpfe (H1, H1bis) verschiebbar angeordnet sind.

7. Bearbeitungszentrum nach einem oder mehreren der Ansprüche 1, 5, 6, wobei die Last-Lagerstruktur (111) zu den zweiten Enden der ersten Führungen (G1, G2) ohne darauf überlagert zu sein gerichtet ist.

8. Bearbeitungszentrum nach einem der Ansprüche 1, 5, 6, 7, wobei die Last-Lagerstruktur eine Portalstruktur ist, wobei vorzugsweise die Struktur den zweiten Endbereichen der ersten Führungen (G1, G2) überlagert ist.

9. Bearbeitungszentrum nach einem oder mehreren der vorstehenden Ansprüche, wobei die Positionierung der Tische (T1, T2) auf den Bearbeitungsbereichen (J) so koordiniert ist, dass zwei Tische (T1, T2) niemals zwei Bearbeitungsbereiche besetzen, auf denen eine selbe Bearbeitungsanordnung (K1, K2) arbeiten kann.

10. Verfahren zur Ausführung von mechanischen Bearbeitungsvorgängen mittels eines Bearbeitungszentrums mit
- zwei Werkstück-Trägertischen (T1, T2),
- zwei ersten Führungen (G1, G2), die sich parallel zu einer ersten Richtung (Y) erstrecken, wobei jeder Tisch entlang einer jeweiligen der ersten Führungen bewegbar ist,
- zwei zweiten Führungen (W1, W2), die sich parallel zu einer zweiten Richtung (X) quer zu der ersten Richtung (Y) erstrecken,
- zwei Bearbeitungsanordnungen (K1, K2) von denen eine erste Anordnung (K1) mindestens einen Bearbeitungskopf (H1, H1bis) und eine zweite Anordnung (K2) auch mindestens einen Bearbeitungskopf (H2) aufweist, wobei jede Bearbeitungsanordnung (K1, K2) parallel zu der zweiten Richtung (X) entlang einer jeweiligen der zweiten Führungen (W1, W2) bewegbar ist,
- einer Portalstruktur (11), die quer zu den ersten Führungen (G1, G2) angeordnet ist, wobei mindestens an einer Seite (12, 13) der Portalstruktur (11) eine der Bearbeitungsanordnungen (K2) parallel zu der zweiten Richtung (X) auf einer jeweiligen zweiten Führung (W2) bewegbar ist, wobei die Portalstruktur (11) an einer Zwischenposition der ersten Führungen (G1, G2) überlagert ist, sodass die Tische (T1, T2) auf den ersten Führungen (G1, G2) unter der Portalstruktur (11) bewegbar sind, wobei sie von einer Seite zu der anderen (12, 13) der Portalstruktur (11) passieren,
- einer Last-Lagerstruktur (111), die in zweiten Endbereichen der ersten Führungen (G1, G2) auf gegenüberliegenden Seiten mit Bezug auf erste Endbereiche vorgesehen sind, wobei mindestens eine zweite Führung (W1) für die erste Bearbeitungsanordnung (K1) auf der Last-Lagerstruktur (111) vorgesehen ist,
- vier Bearbeitungsbereichen (J11, J12, J21, J22), in denen die zwei Bearbeitungsanordnungen (K1, K2) an den Werkstücken, die auf den Tischen (T1, T2) vorhanden sind, arbeiten können, und zwar entlang jeder ersten Führung, d. h. für einen jeweiligen Tisch, sind zwei Bearbeitungsbereich vorhanden, einer für jede Bearbeitungsanordnung, sodass jede Bearbeitungsanordnung entsprechend eines programmierten Bearbeitungszyklus auf beiden Werkstück-Trägertischen arbeiten kann,
- zwei Werkstück-Lade/Entladebereichen (F10, F20), die in den ersten Endbereichen definiert sind, einer für jeden Werkstück-Trägertisch,
- einer elektronischen Steuereinheit, auf der ein Programm zur Verwaltung des Zyklus der Bewegung der Tische vorgesehen ist,
wobei das Verfahren für jeden Tisch (T1, T2) vorsieht:
a) Positionierung in einem entsprechenden Lade-/Entladebereich (F10, F20), um mindestens ein Werkstück auf den Tisch zu laden,
b) Bewegung entlang der jeweiligen Führung (G1, G2) von dem Lade-/Entladebereich (F10, F20) zu dem Bearbeitungsbereich (J11, J12, J21, J22) entsprechend einer Interaktion mit der ersten Bearbeitungsanordnung (K1), und Positionierung in dem Bearbeitungsbereich, um einen Bearbeitungsvorgang durch mindestens einen Bearbeitungskopf (H1) der ersten Bearbeitungsanordnung durchzuführen,
c) Verbleiben in dem Bearbeitungsbereich (J11, J12, J21, J22), um einen weiteren Bearbeitungsvorgang durch mindestens einen Bearbeitungskopf (H1) der ersten Bearbeitungsanordnung (K1) durchzuführen,
d) Bewegung zu dem zweiten Bearbeitungsbereich (J11, J12, J21, J22) entlang der entsprechenden ersten Führung und Positionierung in dem zweiten Bearbeitungsbereich, in dem der programmierte Bearbeitungsvorgang durch die zweite Bearbeitungsanordnung (K2) durchgeführt werden kann,
e) Bewegung zu dem Lade-/Entladebereich (F10, F20), um das Werkstück abzugeben und den Zyklus von dem Schritt a) an einem folgenden Werkstück erneut zu beginnen, wobei in der Zeit, in der eine Tisch (T1, T2) in dem Bearbeitungsbereich (J11, J12, J21, J22) der ersten Bearbeitungsanordnung (K1) angeordnet ist, der andere Tisch (T1, T2) zwei Positionen einnimmt, eine Position in dem Bearbeitungsbereich (J11, J12, J21, J22) entsprechend der zweiten Bearbeitungsanordnung (K2), um die Bearbeitung durch die zweite Bearbeitungsanordnung (K2) zu gestatten, und eine Position in dem Lade-/Entladebereich (F10, F20), um eine große laden/entladen des Werkstücks zu gestatten, wobei die Positionierung der Tische (T1, T2) in den Bearbeitungsbereichen (J11, J12, J21, J22) vorzugsweise koordiniert ist, sodass zwei Tische (T1, T2) niemals zwei Bearbeitungsbereich (J11, J12, J21, J22) besetzen, an denen die selbe Bearbeitungsanordnung (K1, K2) arbeiten können.

11. Verfahren zur Durchführung eines mechanischen Bearbeitungsvorgang mittels eines Bearbeitungszentrums (10) nach Anspruch 10, wobei die erste Bearbeitungsanordnung (K1) zwei Bearbeitungsköpfe (H1, H1bis) aufweist, die ausgebildet sind, um an demselben Tisch (T1, T2) zu arbeiten,
wobei für den Schritt, der sich auf den vorgenannten Punkt b) bezieht ,für jeden Tisch (T1, T2) die Positionierung in dem Bearbeitungsbereich (J11, J12, J21, J22) stattfindet, um einen Bearbeitungsvorgang durch einen der zwei Köpfe (H1, H1bis) der ersten Bearbeitungsanordnung (K1) durchzuführen, und für den Schritt am Punkt c) das Verbleiben in dem Bearbeitungsbereich (J11, J12, J21, J22) stattfindet, um einen weiteren Bearbeitungsvorgang durch den anderen der zwei Köpfe (H1, H1bis) der ersten Bearbeitungsanordnung (K1) durchzuführen, wobei vorzugsweise die Positionierung der Tische (T1, T2) in den Bearbeitungsbereichen (J11, J12, J21, J22) so koordiniert ist, dass zwei Tische (T1, T2) niemals zwei Bearbeitungsbereiche (J11, J12, J21, J22) besetzen, an denen die selbe Bearbeitungsanordnung (K1, K2) arbeiten kann.

## Revendications

1. Un centre d'usinage (10) comprenant :
- deux tables de support de pièces à usiner (T1, T2),
- deux premiers guides (G1, G2) qui s'étendent parallèlement à une première direction (Y) ; chaque table (T1, T2) étant déplaçable le long d'un guide respectif parmi lesdits premiers guides (G1, G2),
- deux deuxièmes guides (W1, W2) qui s'étendent parallèlement à une deuxième direction (X) perpendiculaire à ladite première direction (Y),
- deux ensembles d'usinage (K1, K2), un premier ensemble d'usinage (K1) comprenant au moins une tête d'usinage (H1, H1bis) et un deuxième ensemble d'usinage (K2) comprenant au moins une tête d'usinage (H2) ; chaque ensemble d'usinage (K1, K2) étant déplaçable parallèlement à ladite deuxième direction (X) le long d'un guide respectif parmi lesdits deuxièmes guides (W1, W2) ;
- une structure portante (11) agencée perpendiculairement auxdits premiers guides (G1, G2) ; sur au moins un côté (12, 13) de ladite structure portante (11), l'un (K2) desdits assemblages étant déplaçable parallèlement à ladite deuxième direction (X), sur un deuxième guide respectif (W2), ladite structure portante (11) étant superposée à une position intermédiaire desdits premiers guides (G1, G2), de sorte que lesdites tables (T1, T2) soient déplaçables sur lesdits premiers guides (G1, G2) sous ladite structure portante (11), en passant d'un côté à l'autre (12, 13) de ladite structure portante (11),
- une structure porte-charge (111) prévu dans des deuxièmes zones d'extrémité desdits premiers guides (G1, G2), du côté opposé par rapport à des premières zones d'extrémité, l'un (W1) au moins des deuxièmes guides pour ledit premier ensemble d'usinage (K1) étant prévu sur ladite structure porte-charge (111),
- quatre zones d'usinage (J11, J12, J21, J22) dans lesquelles les deux ensembles d'usinage (K1, K2) peuvent opérer sur des pièces à usiner présentes sur lesdites tables (T1, T2) ; le long de chaque premier guide (G1, G2), c'est-à-dire pour une table respective (T1, T2), deux zones d'usinage étant présentes, une pour chaque ensemble d'usinage (K1, K2), de sorte que chaque ensemble d'usinage (K1, K2) puisse opérer en fonction d'un cycle d'usinage programmé, sur les deux tables de support de pièces à usiner (T1, T2),
- deux zones de chargement/déchargement de pièces à usiner (F10, F20) définies dans lesdites premières zones d'extrémité, une pour chaque table de support de pièce à usiner (T1, T2),
- une unité de commande électronique dans laquelle un programme pour gérer le cycle de mouvements desdites tables (T1, T2) est prévu.

2. Centre d'usinage selon la revendication 1, dans lequel ledit premier centre d'usinage (K1) comprend deux têtes d'usinage (H1, H1bis) aptes à opérer sur la même table (T1, T2).

3. Centre d'usinage selon l'une ou plusieurs des revendications précédentes, comprenant seulement deux tables de support de pièces à usiner (T1, T2) et seulement deux ensembles d'usinage (K1, K2).

4. Centre d'usinage selon l'une des revendications précédentes, comprenant une unique dite structure portante (11) sur laquelle ledit deuxième ensemble d'usinage (K2), agencé sur un côté correspondant (12, 13) de ladite structure portante (11), se déplace dans ladite deuxième direction (X).

5. Centre d'usinage selon la revendication 1, dans lequel un pont transversal (150, 150bis), déplaçable parallèlement à ladite deuxième direction ( X) le long d'un guide respectif (W1) parmi lesdits deuxièmes guides prévu sur ladite structure portante (111), est associé à ladite ou lesdites tête(s) d'usinage (H1, H1bis), et le long d'un deuxième guide supplémentaire (W3) positionné sur ladite structure portante (11), ladite ou lesdites tête(s) d'usinage (H1, H1bis) coulissant sur ledit pont transversal (150, 150bis) parallèlement à ladite première direction (Y) ; ladite deuxième tête d'usinage (H2) étant agencée de façon coulissante sur le côté opposé (13) de ladite structure portante (11) par rapport au côté sur lequel ledit deuxième guide supplémentaire (W3) est positionné.

6. Centre d'usinage selon la revendication 5, dans lequel deux ponts transversaux (150, 150bis), sur lesquelles des têtes d'usinage respectives (H1, H1bis) sont agencées de manière coulissante, sont présents.

7. Centre d'usinage selon l'une ou plusieurs des revendications 1, 5, 6, dans lequel ladite structure porte-charge (111) fait face auxdites deuxièmes extrémités desdites premiers guides (G1, G2), sans être superposé à eux.

8. Centre d'usinage selon l'une ou plusieurs des revendications 1, 5, 6, 7, dans lequel ladite structure porte-charge est une structure portante ; de préférence ladite structure étant superposées aux deuxièmes zones d'extrémité desdits premiers guides (G1, G2).

9. Centre d'usinage selon l'une ou plusieurs des revendications précédentes, dans lequel le positionnement desdites tables (T1, T2) sur lesdites zones d'usinage (J) est coordonné de telle sorte que les deux tables (T1, T2) n'occupent jamais deux zones d'usinage sur lesquelles un même ensemble d'usinage (K1, K2) peut opérer.

10. Procédé pour exécuter des opérations d'usinage mécanique au moyen d'un centre d'usinage comprenant
- deux tables de support de pièces à usiner (T1, T2),
- deux premiers guides (G1, G2) qui s'étendent parallèlement à une première direction (Y) ; chaque table étant déplaçable le long d'un guide respectif parmi lesdits premiers guides,
- deux deuxièmes guides (W1, W2) qui s'étendent parallèlement à une deuxième direction (X) perpendiculaire à ladite première direction (Y),
- deux ensembles d'usinage (K1, K2) dont un premier ensemble (K1) comprenant au moins une tête d'usinage (H1, H1bis) et un deuxième ensemble (K2) comprenant également au moins une tête d'usinage (H2) ; chaque ensemble d'usinage (K1, K2) étant déplaçable parallèlement à ladite deuxième direction (X) le long d'un guide respectif parmi lesdits deuxièmes guides (W1, W2) ;
- une structure portante (11) agencée perpendiculairement auxdits premiers guides (G1, G2) ; sur au moins un côté (12, 13) de ladite structure portante (11) l'un (K2) desdits ensembles d'usinage étant déplaçable parallèlement à ladite deuxième direction (X), sur un deuxième guide respectif (W2), ladite structure portante (11) étant superposée à une position intermédiaire desdits premiers guides (G1, G2) de sorte que lesdites tables (T1, T2) soient déplaçables sur lesdits premiers guides (G1, G2) sous ladite structure portante (11), en passant d'un côté à l'autre (12, 13) de ladite structure portante (11),
- une structure porte-charge (111) prévu dans des deuxièmes zones d'extrémité desdits premiers guides (G1, G2), du côté opposé par rapport à des premières zones d'extrémité, l'un (W1) au moins des deuxièmes guides pour ledit premier ensemble d'usinage (K1) étant prévu sur ladite structure porte-charge (111),
- quatre zones d'usinage (J11, J12, J21, J22) dans lesquelles les deux ensembles d'usinage (K1, K2) peuvent opérer sur des pièces à usiner présentes sur lesdites tables (T1, T2) ; le long de chaque premier guide, c'est-à-dire pour une table respective, deux zones d'usinage étant présentes, une pour chaque ensemble d'usinage, de sorte que l'ensemble d'usinage puisse opérer en fonction d'un cycle d'usinage programmé, sur les deux tables de support de pièce à usiner,
- deux zones de chargement/déchargement de pièces à usiner (F10, F20) définies dans lesdites premières zones d'extrémité, une pour chaque table de support de pièce à usiner,
- une unité de commande électronique dans laquelle un programme pour gérer le cycle de mouvements desdites tables est prévu ;
ledit procédé prévoyant, pour chaque table (T1, T2) :
a) le positionnement dans la zone de chargement/déchargement correspondante (F10, F20), pour charger au moins une pièce à usiner sur ladite table,
b) le déplacement, le long du premier guide respectif (G1, G2), de ladite zone de chargement/déchargement (F10, F20) à la zone d'usinage (J11, J12, J21, J22) correspondant à une interaction avec ledit premier ensemble d'usinage (K1) et le positionnement dans ladite zone d'usinage pour exécuter une opération d'usinage à l'aide d'au moins une tête d'usinage (H1) dudit premier ensemble d'usinage,
c) la permanence dans ladite zone d'usinage (J11, J12, J21, J22) pour exécuter une opération supplémentaire d'usinage à l'aide d'au moins une tête d'usinage (H1) dudit premier ensemble d'usinage (K1),
d) le déplacement vers la deuxième zone d'usinage (J11, J12, J21, J22) le long du premier guide correspondant et le positionnement dans ladite deuxième zone d'usinage dans laquelle l'opération d'usinage programmée peut être exécutée par ledit deuxième ensemble d'usinage (K2),
e) le déplacement vers ladite zone de chargement/déchargement (F10, F20) pour décharger la pièce à usiner et recommencer le cycle à partir de l'étape a) sur d'autres pièces à usiner, et dans lequel, au moment où une table (T1, T2) est agencée dans la zone d'usinage (J11, J12, J21, J22) dudit premier ensemble d'usinage (K1), l'autre table (T1, T2) prend deux positions, une position dans la zone d'usinage (J11, J12, J21, J22) correspondant audit deuxième ensemble d'usinage (K2) pour permettre l'usinage dudit deuxième ensemble d'usinage (K2) et une position dans la zone de chargement/déchargement (F10, F20), pour permettre le chargement/déchargement de la pièce à usiner ; de préférence le positionnement desdites tables (T1, T2) dans lesdites zones d'usinage (J11, J12, J21, J22) est coordonné de telle sorte que les deux tables (T1, T2) n'occupent jamais deux zones d'usinage (J11, J12, J21, J22) sur lesquelles un même ensemble d'usinage (K1, K2) peut opérer.

11. Procédé pour exécuter des opérations d'usinage mécanique au moyen d'un centre d'usinage (10) selon la revendication 10, dans lequel ledit premier ensemble d'usinage (K1) comprend deux têtes d'usinage (H1, H1bis) aptes à opérer sur la même table (T1, T2) ; pour l'étape relative au point b) précité, pour chaque table (T1, T2), le positionnement a lieu dans ladite zone d'usinage (J11, J12, J21, J22) pour exécuter une opération d'usinage à l'aide de l'une des deux têtes (H1, H1bis) dudit premier ensemble d'usinage (K1) et, pour l'étape du point c), la permanence dans ladite zone d'usinage (J11, J12, J21, J22) a lieu pour exécuter une opération d'usinage supplémentaire à l'aide de l'autre des deux têtes (H1, H1bis) dudit premier ensemble d'usinage (K1) ; de préférence, le positionnement desdites tables (T1, T2) dans lesdites zones d'usinage (J11, J12, J21, J22) est coordonné de telle sorte que deux tables (T1, T2) n'occupent jamais deux zones d'usinage (J11, J12, J21, J22) sur lesquelles un même ensemble d'usinage (K1, K2) peut opérer.
